# EUROPÄISCHE PATENTSCHRIFT

(11) **EP 1 673 849 B1**
(45) Veröffentlichungstag und Bekanntmachung des Hinweises auf die Patenterteilung: **06.05.2020**
(21) Anmeldenummer: 03818845.4
(22) Anmeldetag: 20.11.2003
(51) Int. Cl.: H02M 7/483

(54) **UMRICHTERSCHALTUNG ZUR SCHALTUNG EINER VIELZAHL VON SCHALTSPANNUNGSNIVEAUS**
CONVERTER CIRCUIT FOR CONNECTING A PLURALITY OF SWITCHING VOLTAGE LEVELS
CIRCUIT CONVERTISSEUR POUR COMMANDER UNE PLURALITE DE NIVEAUX DE TENSION DE COMMUTATION

(30) Priorität: 17.10.2003 EP 03405748
(43) Veröffentlichungstag der Anmeldung: 28.06.2006
(73) Patentinhaber: ABB Schweiz AG, 5400 Baden (CH)
(72) Erfinder: BARBOSA, Peter, CH-5405 Dättwil (CH); STEINKE, Jürgen, 79774 Albbruck (DE); STEIMER, Peter, CH-5424 Unterehrendingen (CH); MEYSENC, Luc, CH-5405 Baden-Dättwil (CH); MEYNARD, Thierry, F-31700 Beauzelle (FR)
(74) Vertreter: Michalski Hüttermann & Partner Patentanwälte mbB
(86) Internationale Anmeldenummer: PCT/CH2003/000768
(87) Internationale Veröffentlichungsnummer: WO 2005/036719

(56) Entgegenhaltungen:
- WO-A-01/93412
- FR-A- 2 828 029
- US-A- 5 737 201
- WATKINS S J ET AL: "Influence of multilevel sinusoidal pwm schemes on the performance of a flying-capacitor inverter", PROCEEDINGS OF THE 14TH. INTERNATIONAL SYMPOSIUM ON POWER SEMICONDUCTOR DEVICES & ICS. ISPSD'02. SANTA FE, NM, JUNE 4 - 7, 2002; [INTERNATIONAL SYMPOSIUM ON POWER SEMICONDUCTOR DEVICES & IC'S], NEW YORK, NY : IEEE, US, 4 June 2002 (2002-06-04), pages 92-97, XP010602888, ISBN: 978-0-7803-7318-1
- S.J. Watkins ET AL: "Modelling and Control of a Flying-Capacitor Inverter", 9th European Conference on Power Electronics and Applications. EPE 2001, 1 January 2001 (2001-01-01), XP055063875, Brussels, Belgium
- ZHANG L ET AL: "Analysis and control of a multi-level flying capacitor inverter", POWER ELECTRONICS CONGRESS, 2002. TECHNICAL PROCEEDINGS. CIEP 2002. VI II IEEE INTERNATIONAL OCT. 20-24, 2002, PISCATAWAY, NJ, USA,IEEE, 20 October 2002 (2002-10-20), pages 66-71, XP010648775, ISBN: 978-0-7803-7640-3
- Mitsubishi: "Using IGBT modules", , 1998, Retrieved from the Internet: URL:http://www.mitsubishielectric.com/semi conductors/files/manuals/powermos4_0.pdf [retrieved on 2018-06-27]
- PENG F Z: "A generalized multilevel inverter topology with self voltage balancing", INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 3, 8 October 2000 (2000-10-08), pages 2024-2031, XP010521388, ISBN: 978-0-7803-6401-1
- FANG ZHENG PENG: "A Generalized Multilevel Inverter Topology with Self Voltage Balancing", IEEE TRANSACTIONS ON INDUSTRY APPLICATIONS, IEEE SERVICE CENTER, PISCATAWAY, NJ, US, vol. 37, no. 2, 1 March 2001 (2001-03-01), XP011022945, ISSN: 0093-9994

## Beschreibung

### Technisches Gebiet

Die Erfindung bezieht sich auf das Gebiet der Leistungselektronik. Sie geht aus von einer Umrichterschaltung zur Schaltung einer Vielzahl von Schaltspannungsniveaus gemäss dem Oberbegriff des unabhängigen Anspruchs.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung zur Schaltung einer Vielzahl von Schaltspannungsniveaus ist in der DE 692 05 413 T2 angegeben. Darin sind n erste Schaltgruppen für jede Phase vorgesehen, wobei die n-te erste Schaltgruppe durch einen ersten Leistungshalbleiterschalter und einen zweiten Leistungshalbleiterschalter gebildet ist und die erste erste Schaltgruppe bis zur (n-1)-ten Schaltgruppe jeweils durch einen ersten Leistungshalbleiterschalter und einen zweiten Leistungshalbleiterschalter und durch einen mit dem ersten und zweiten Leistungshalbleiterschalter verbundenen Kondensator gebildet sind, wobei n ≥ 2 ist. Jede der n ersten Schaltgruppen ist verkettet mit der jeweils benachbarten ersten Schaltgruppe verbunden, wobei der erste und der zweite Leistungshalbleiterschalter der ersten ersten Schaltgruppe miteinander verbunden sind. Der erste und der zweite Leistungshalbleiterschalter ist jeweils durch einen Bipolartransistor mit isoliert angeordneter Ansteuerelektrode (IGBT - Insulated Gate Bipolartransistor) und durch eine dem Bipolartransistor antiparallel geschaltete Diode gebildet.

Problematisch bei einer Umrichterschaltung zur Schaltung einer Vielzahl von Schaltspannungsniveaus nach der DE 692 05 413 T2 ist, dass die in der Umrichterschaltung während des Betriebs gespeicherte elektrische Energie sehr hoch ist. Da die elektrische Energie in den Kondensatoren der n ersten Schaltgruppen der Umrichterschaltung gespeichert ist, müssen die Kondensatoren für diese elektrische Energie, d.h. bezüglich ihre Spannungsfestigkeit und/oder ihrer Kapazität, ausgelegt werden. Dies bedingt aber Kondensatoren mit grosser Baugrösse, die entsprechend teuer sind. Zudem benötigt die Umrichterschaltung aufgrund der bezüglich der Baugrösse grossen Kondensatoren viel Platz, so dass ein platzsparender Aufbau, wie er für viele Anwendungen, beispielsweise für Traktionsanwendungen, gefordert ist, nicht möglich ist. Weiterhin bewirkt der Einsatz der bezüglich der Baugrösse grossen Kondensatoren einen hohen Montage- und Wartungsaufwand.

PENG F. Z.: "A generalized multilevel inverter topology with self voltage balancing", INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 3, 8. Oktober 2000 (2000-10-08), Seiten 2024-2031, ISBN: 978-0-7803-6401-1 offenbart eine nahezu identische modulare Mehrpunktstromrichterstruktur nach dem flying capacitor Prinzip.

### Darstellung der Erfindung

Aufgabe der Erfindung ist es deshalb, eine Umrichterschaltung zur Schaltung einer Vielzahl von Schaltspannungsniveaus anzugeben, die möglichst wenig elektrische Energie während ihres Betriebes speichert und platzsparend realisiert werden kann. Diese Aufgabe wird durch die Merkmale des Anspruchs 1 gelöst. In den abhängigen Ansprüchen sind vorteilhafte Weiterbildungen der Erfindung angegeben.

Durch die vorgesehenen p zweiten Schaltgruppen und p dritten Schaltgruppen und deren vorstehend beschriebenen Verbindungen sind die p zweiten Schaltgruppen beispielsweise nur bei der positiven Halbschwingung bezüglich der Phasenausgangswechselspannung und die p dritten Schaltgruppen nur bei der negativen Halbschwingung am Betrieb der erfindungsgemässen Umrichterschaltung beteiligt. Dadurch kann die in der Umrichterschaltung, insbesondere in den Kondensatoren der p zweiten und dritten Schaltgruppen, gespeicherte elektrische Energie vorteilhaft reduziert werden. Weiterhin dienen die n ersten Schaltgruppen nur zur Balancierung der Phasenausgangswechselspannung, so dass bei mehreren vorhandenen ersten Schaltgruppen die Kondensatoren der n ersten Schaltgruppen im balancierten Zustand im wesentlichen keinen Strom führen und somit auch im wesentlichen keine elektrisehe Energie speichern. Somit kann die gespeicherte elektrische Energie der Umrichterschaltung insgesamt klein gehalten werden, wodurch die Kondensatoren der Umrichterschaltung nur für eine kleine zu speichernde elektrische Energie, d.h. bezüglich ihre Spannungsfestigkeit und/oder ihrer Kapazität, ausgelegt werden müssen. Aufgrund der geringen Baugrösse der Kondensatoren benötigt die Umrichterschaltung sehr wenig Platz, so dass vorteilhaft ein platzsparender Aufbau, wie er für viele Anwendungen, beispielsweise für Traktionsanwendungen, gefordert ist, möglich ist. Zudem kann durch die geringe Baugrösse der Kondensatoren auch der Montage- und Wartungsaufwand vorteilhaft gering gehalten werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1a: eine erste Ausführungsform einer erfindungsgemässen Umrichterschaltung,
- Fig. 1b: eine zweite Ausführungsform einer erfindungsgemässen Umrichterschaltung
- Fig. 1c: eine dritte Ausführungsform einer erfindungsgemässen Umrichterschaltung
- Fig. 2: eine vierte Ausführungsform der erfindungsgemässen Umrichterschaltung,
- Fig. 3a: eine fünfte Ausführungsform der erfindungsgemässen Umrichterschaltung,
- Fig. 3b: eine sechste Ausführungsform der erfindungsgemässen Umrichterschaltung und
- Fig. 4: eine siebte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

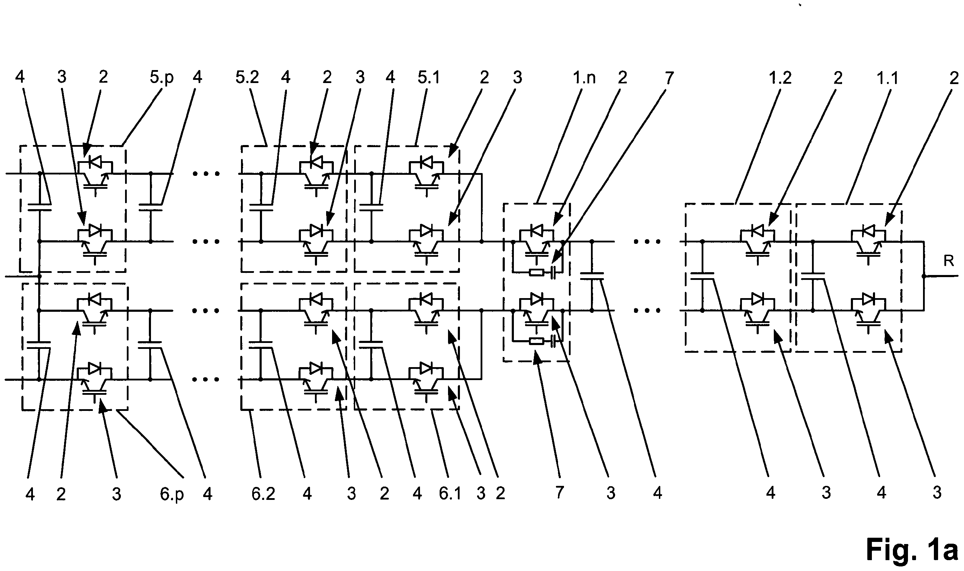

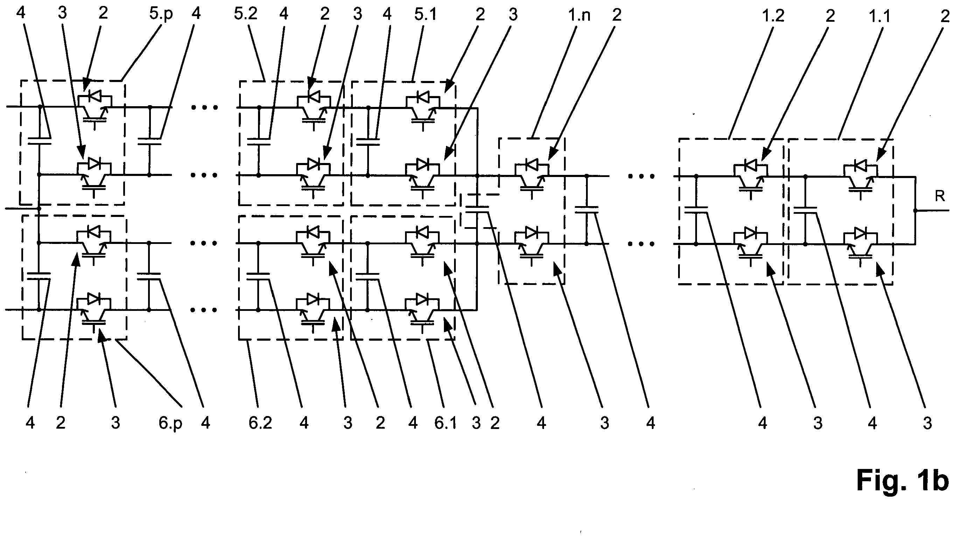

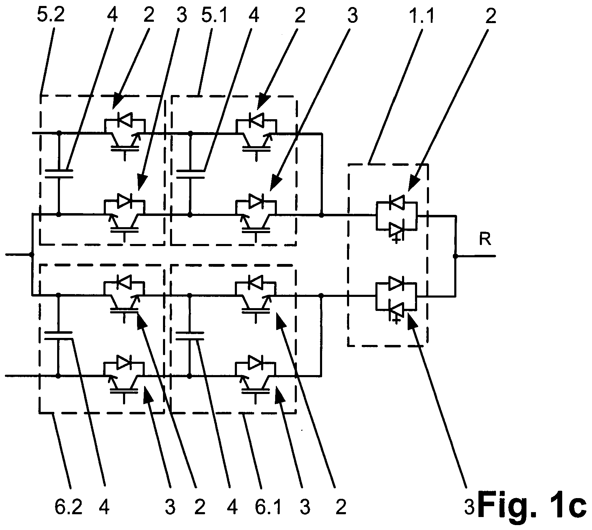

In Fig. 1a ist eine, insbesondere einphasige, erste Ausführungsform einer erfindungsgemässen Umrichterschaltung zur Schaltung einer Vielzahl von Schaltspannungsniveaus gezeigt. Darin umfasst die Umrichterschaltung n für jede Phase R, S, T vorgesehene erste Schaltgruppen 1.1,..., 1.n, wobei erfindungsgemäss n ≥ 1 und die n-te erste Schaltgruppe 1.n durch einen ersten Leistungshalbleiterschalter 2 und einen zweiten Leistungshalbleiterschalter 3 gebildet ist und für n > 1 die erste erste Schaltgruppe 1.1 bis zur (n-1)-ten Schaltgruppe 1.(n-1) jeweils durch einen ersten Leistungshalbleiterschalter 2 und einen zweiten Leistungshalbleiterschalter 3 und durch einen mit dem ersten und zweiten Leistungshalbleiterschalter 2, 3 verbundenen Kondensator 4 gebildet sind. Da es sich gemäss Fig. 1a bei jeder der ersten Schaltgruppen 1, 1.1,..., 1.n um einen Vierpol handelt, ist jede der n ersten Schaltgruppen 1.1,..., 1.n bei mehreren vorhandenen ersten Schaltgruppen 1.1,..., 1.n verkettet mit der jeweils benachbarten ersten Schaltgruppe 1.1 ,..., 1.n verbunden, d.h. dass die n-te erste Schaltgruppe 1.n mit der (n-1)-ten ersten Schaltgruppe 1.(n-1) und die (n-1)-ten ersten Schaltgruppe 1.(n-1) mit der (n-2)-ten ersten Schaltgruppe 1.(n-2) usw. verkettet verbunden ist. Gemäss Fig.1 a sind der erste und der zweite Leistungshalbleiterschalter 2, 3 der ersten ersten Schaltgruppe 1.1 miteinander verbunden. Der Verbindungspunkt des ersten und des zweiten Leistungshalbleiterschalters 2, 3 der ersten ersten Schaltgruppe 1.1 bildet gemäss Fig. 1a eine Phasenanschluss, insbesondere für die Phase R.

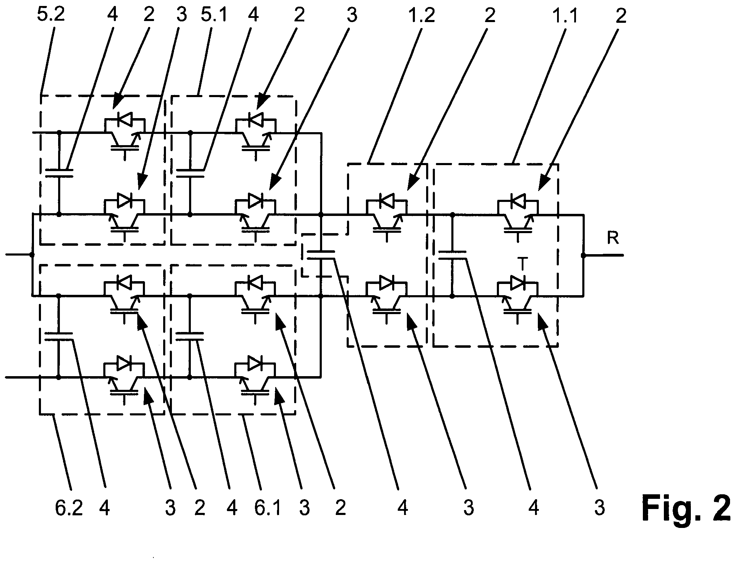

Erfindungsgemäss sind nun gemäss Fig. 1a p zweite Schaltgruppen 5.1, ..., 5.p und p dritte Schaltgruppen 6.1, ..., 6.p vorgesehen, welche jeweils durch einen ersten Leistungshalbleiterschalter 2 und einen zweiten Leistungshalbleiterschalter 3 und durch einen mit dem ersten und zweiten Leistungshalbleiterschalter 2, 3 verbundenen Kondensator 4 gebildet sind, wobei p ≥ 1 ist. Da es sich gemäss Fig. 2 bei jeder der p zweiten Schaltgruppen 5.1, ..., 5.p und bei jeder p dritten Schaltgruppen 6.1, ..., 6.p um einen Vierpol handelt, ist jede der p zweiten Schaltgruppen 5.1, ..., 5.p bei mehreren vorhandenen zweiten Schaltgruppen 5.1, ..., 5.p verkettet mit der jeweils benachbarten zweiten Schaltgruppe 5.1, ..., 5.p verbunden, d.h. dass die p-te zweite Schaltgruppe 5.p mit der (p-1)-ten zweiten Schaltgruppe 5.(p-1) und die (p-1)-ten zweite Schaltgruppe 5.(p-1) mit der (p-2)-ten zweiten Schaltgruppe 5.(p-2) usw. verkettet verbunden ist. Weiterhin ist gemäss Fig. 1a jede der p dritten Schaltgruppen 6.1, ..., 6.p bei mehreren vorhandenen dritten Schaltgruppen 6.1, ..., 6.p verkettet mit der jeweils benachbarten dritten Schaltgruppe 6.1, ..., 6.p verbunden, d.h. dass die p-te dritte Schaltgruppe 6.p mit der (p-1)-ten dritten Schaltgruppe 6.(p-1) und die (p-1)-ten dritte Schaltgruppe 6.(p-1) mit der (p-2)-ten dritten Schaltgruppe 6.(p-2) usw. verkettet verbunden ist.

Desweiteren ist die erste zweite Schaltgruppe 5.1 mit dem ersten Leistungshalbleiterschalter 2 der n-ten ersten Schaltgruppe 1.n verbunden und die erste dritte Schaltgruppe 6.1 ist mit dem zweiten Leistungshalbleiterschalter 3 der n-ten ersten Schaltgruppe 1.n verbunden. Schliesslich ist der Kondensator 4 der p-ten zweiten Schaltgruppe 5.p mit dem Kondensator 4 der p-ten dritten Schaltgruppe 6.p seriell verbunden. Mittels der vorgesehenen p zweiten Schaltgruppen 5.1, ..., 5.p und p dritten Schaltgruppen 6.1, ..., 6.p und deren beschriebenen Verbindungen jeweils untereinander, zueinander und zu der n-ten ersten Schaltgruppe 1.n sind die p zweiten Schaltgruppen 5.1, ..., 5.p beispielsweise nur bei der positiven Halbschwingung bezüglich der Phasenausgangswechselspannung und die p dritten Schaltgruppen 6.1, ..., 6.p nur bei der negativen Halbschwingung bezüglich der Phasenausgangswechselspannung am Betrieb der erfindungsgemässen Umrichterschaltung beteiligt. Somit kann die in der Umrichterschaltung, insbesondere in den Kondensatoren 4 der p zweiten und dritten Schaltgruppen 5.1, ..., 5.p; 6.1, ..., 6.p, gespeicherte elektrische Energie vorteilhaft reduziert werden. Ferner dienen die n ersten Schaltgruppen 1.1,...,1.n lediglich zur Balancierung der Phasenausgangswechselspannung, so dass die Kondensatoren 4 der n ersten Schaltgruppen 1.1,...,1.n im balancierten, d.h. im ausgeglichenen Zustand der Phasenausgangswechselspannung im wesentlichen keinen Strom führen und somit auch im wesentlichen keine elektrische Energie speichern. Damit kann die gespeicherte elektrische Energie der erfindungsgemässen Umrichterschaltung insgesamt klein gehalten werden, wodurch die Kondensatoren 4 der Umrichterschaltung nur für eine kleine zu speichernde elektrische Energie, d.h. bezüglich ihre Spannungsfestigkeit und/oder ihrer Kapazität, ausgelegt werden müssen. Aufgrund der geringen Baugrösse der Kondensatoren 4 benötigt die Umrichterschaltung ein Minimum an Platz, so dass vorteilhaft ein platzsparender Aufbau, wie er für viele Anwendungen, beispielsweise für Traktionsanwendungen, gefordert ist, ermöglich ist. Desweiteren kann durch die geringe Baugrösse der Kondensatoren 4 auch der Montage- und Wartungsaufwand vorteilhaft klein gehalten werden.

Gemäss Fig. 1a ist parallel zum ersten Leistungshalbleiterschalter 2 der n-ten ersten Schaltgruppe 1.n beispielhaft ein Spannungsbegrenzungsnetzwerk 7 geschaltet und parallel zum zweiten Leistungshalbleiterschalter 3 der n-ten ersten Schaltgruppe 1.n ist ebenfalls ein Spannungsbegrenzungsnetzwerk 7 geschaltet. Das Spannungsbegrenzungsnetzwerk 7 kann optional gewählt werden und dient vorteilhaft der Stabilisierung der Phasenausgangsspannung, insbesondere bei einer gewünschten Phasenausgangsspannung von 0V insbesondere bei einer gewünschten Phasenausgangsspannung von 0V. Vorzugsweise weist das Spannungsbegrenzungsnetzwerk 7 einen Kondensator oder, wie in Fig. 1a gezeigt, eine Serienschaltung eines Widerstands mit einem Kondensator auf. Für den Fachmann ist es klar, dass auch sämtliche weitere erste und zweite Leistungshalbleiterschalter 2, 3 der ersten Schaltgruppen 1.1,..., 1.(n-1) sowie der zweiten und dritten Schaltgruppen 5.1, ..., 5.p; 6.1, ..., 6.p eine Spannungsbegrenzungsnetzwerk 7, insbesondere jeglicher Art, und/oder ein Strombegrenzungsnetzwerk, insbesondere jeglicher Art, aufweisen können.

In Fig. 1b ist eine, insbesondere einphasige, zweite Ausführungsform der erfindungsgemässen Umrichterschaltung zur Schaltung einer Vielzahl von Schaltspannungsniveaus gezeigt. Im Unterschied zur ersten Ausführungsform nach Fig. 1a weist die n-te erste Schaltgruppe 1.n bei der zweiten Ausführungsform gemäss Fig. 1b einen mit dem ersten und zweiten Leistungshalbleiterschalter 2, 3 der n-ten ersten Schaltgruppe 1.n verbundenen Kondensator 4 auf, wobei die erste zweite Schaltgruppe 5.1 mit dem Kondensator 4 der n-ten ersten Schaltgruppe 1.n verbunden ist und die erste dritte Schaltgruppe 6.1 mit dem Kondensator 4 der n-ten ersten Schaltgruppe 1.n verbunden ist. Durch den Kondensator 4 der n-ten ersten Schaltgruppe 1.n wird vorteilhaft erreicht, dass insbesondere bei einer gewünschten Phasenausgangsspannung von 0V, diese Phasenausgangsspannung stabilisiert und somit problemlos ohne Störeffekte erreicht werden kann. Im Vergleich der ersten Ausführungsform nach Fig. 1a mit der zweiten Ausführungsform nach Fig. 1b kann der Kondensator 4 der n-ten ersten Schaltgruppe 1.n optional gewählt werden und dient nur der Spannungsbegrenzung beziehungsweise der Spannungsstabilisierung und ist somit nicht als Spannungsquelle anzusehen. Es ist auch denkbar, aber in Fig. 1a der Übersichtlichkeit nicht gezeigt, dass anstelle des Kondensators 4 der n-ten ersten Schaltgruppe 1.n eine Serienschaltung des Kondensators 4 mit einem Widerstand vorgesehen ist. Es versteht sich, dass der Kondensator 4 der n-ten ersten Schaltgruppe 1.n beziehungsweise die Serienschaltung des Kondensators 4 mit einem Widerstand für sämtliche beschriebene Ausführungsformen optional gewählt werden kann.

In Fig. 1c ist eine, insbesondere einphasige, dritte Ausführungsform der erfindungsgemässen Umrichterschaltung zur Schaltung einer Vielzahl von Schaltspannungsniveaus dargestellt. Darin ist die Anzahl der n ersten Schaltgruppen 1.1,..., 1.n kleiner als die Anzahl der p zweiten und dritten Schaltgruppen 5.1, ..., 5.p; 6.1, ..., 6.p. In Fig. 1c sind dies dann n=1 erste Schaltgruppen 1.1, 1.2 und p=2 zweite Schaltgruppen 5.1, 5.2 und p=2 dritte Schaltgruppen 6.1, 6.2. Daraus resultiert vorteilhaft, dass weniger erste Schaltgruppen 1.1,..., 1.n und damit weniger erste und zweite Leistungshalbleiterschalter 2, 3 und weniger Kondensatoren 4 benötigt werden und die erfindungsgemässe Umrichterschaltung somit insgesamt weiter bezüglich ihres Platzbedarfes reduziert werden kann. Vorzugsweise sind die ersten und zweiten Leistungshalbleiterschalter bei n=1 erste Schaltgruppen 1.1, 1.2, wie beispielhaft in Fig. 1c gezeigt, jeweils ein hochsperrender bidirektionaler Leistungshalbleiterschalter, d.h. durch ein ansteuerbares hochsperrendes elektronisches Bauelement mit unidirektionaler Stromführungsrichtung, beispielsweise durch einen Abschaltthyristor (GTO - Gate Turn-Off Thyristor) oder einen integrierten Thyristor mit kommutierter Ansteuerelektrode (IGCT - Integrated Gate Commutated Thyristor), und durch ein dazu antiparallel geschaltetes passives nicht ansteuerbares hochsperrendes elektronisches Bauelement mit unidirektionaler Stromführungsrichtung, beispielsweise durch eine Diode gebildet.

In Fig. 2 ist eine, insbesondere einphasige, vierte Ausführungsform der erfindungsgemässen Umrichterschaltung zur Schaltung einer Vielzahl von Schaltspannungsniveaus dargestellt. Darin entspricht die Anzahl der n ersten Schaltgruppen 1.1,..., 1.n der Anzahl der p zweiten und dritten Schaltgruppen 5.1, ..., 5.p; 6.1, ..., 6.p entspricht. In Fig. 2 sind dies dann n=2 erste Schaltgruppen 1.1, 1.2 und p=2 zweite Schaltgruppen 5.1, 5.2 und p=2 dritte Schaltgruppen 6.1, 6.2. Entspricht die Anzahl der n ersten Schaltgruppen 1.1,..., 1.n der Anzahl der p zweiten und dritten Schaltgruppen 5.1, ..., 5.p; 6.1, ..., 6.p, so können vorteilhaft allgemein (2n+1) Schaltspannungsniveaus der erfindungsgemässen Umrichterschaltung geschalten werden, d.h. bei n=2 gemäss Fig. 2 können dann fünf Schaltspannungsniveaus geschalten werden.

Weiterhin ist es auch denkbar, dass die Anzahl der n ersten Schaltgruppen 1.1,..., 1.n grösser als die Anzahl der p zweiten und dritten Schaltgruppen 5.1, ..., 5.p; 6.1, ..., 6.p ist.

Gemäss Fig. 1a und Fig. 1c sind der erste und zweite Leistungshalbleiterschalter 2, 3 der ersten zweiten Schaltgruppe 5.1 miteinander verbunden, wobei der Verbindungspunkt des ersten und zweiten Leistungshalbleiterschalters 2, 3 der ersten zweiten Schaltgruppe 5.1 mit dem ersten Leistungshalbleiterschalter 2 der n-ten ersten Schaltgruppe 1.n verbunden ist. Weiterhin sind gemäss Fig. 1a und Fig. 1c der erste und zweite Leistungshalbleiterschalter 2, 3 der ersten dritten Schaltgruppe 6.1 miteinander verbunden, wobei der Verbindungspunkt des ersten und zweiten Leistungshalbleiterschalters 2, 3 der ersten dritten Schaltgruppe 6.1 mit dem zweiten Leistungshalbleiterschalter 3 der n-ten ersten Schaltgruppe 1.n verbunden ist.

Gemäss Fig. 1b sind der erste und zweite Leistungshalbleiterschalter 2, 3 der ersten zweiten Schaltgruppe 5.1 miteinander verbunden, wobei der Verbindungspunkt des ersten und zweiten Leistungshalbleiterschalters 2, 3 der ersten zweiten Schaltgruppe 5.1 mit dem Verbindungspunkt des Kondensators 4 der n-ten ersten Schaltgruppe 1.n und dem ersten Leistungshalbleiterschalter 2 der n-ten ersten Schaltgruppe 1.n verbunden ist. Ferner sind der erste und zweite Leistungshalbleiterschalter 2, 3 der ersten dritten Schaltgruppe 6.1 miteinander verbunden, wobei der Verbindungspunkt des ersten und zweiten Leistungshalbleiterschalters 2, 3 der ersten dritten Schaltgruppe 6.1 mit dem Verbindungspunkt des Kondensators 4 der n-ten ersten Schaltgruppe 1.n und dem zweiten Leistungshalbleiterschalter 3 der n-ten ersten Schaltgruppe 1.n verbunden ist.

Vorzugsweise ist der erste Leistungshalbleiterschalter 2 und der zweite Leistungshalbleiterschalter 3 einer jeden Schaltgruppe 1.1,..., 1.n; 5.1, ..., 5.p; 6.1, ..., 6.p ein bidirektionalen Leistungshalbleiterschalter, wie bei den Ausführungsformen gemäss Fig. 1a, Fig. 1b, Fig. 1c und Fig. 2 gezeigt.

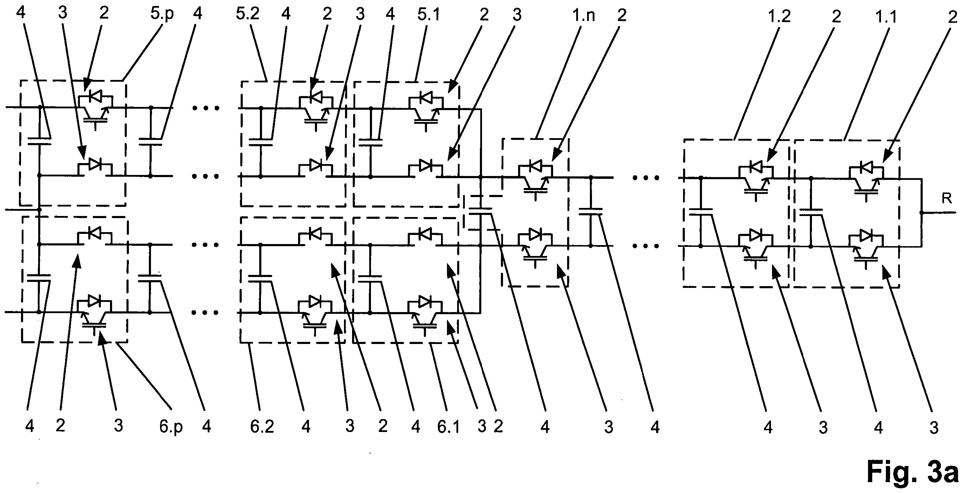

In Fig. 3a ist eine, insbesondere einphasige, fünfte Ausführungsform der erfindungsgemässen Umrichterschaltung zur Schaltung einer Vielzahl von Schaltspannungsniveaus gezeigt. Gemäss Fig. 3a ist der erste Leistungshalbleiterschalter 2 einer jeden ersten und einer jeden zweiten Schaltgruppe 1.1,..., 1.n; 5.1, ..., 5.p ein bidirektionalen Leistungshalbleiterschalter. Ferner ist der zweite Leistungshalbleiterschalter 3 einer jeden ersten Schaltgruppe 1.1,..., 1.n und einer jeden dritten Schaltgruppe 6.1, ..., 6.p ein bidirektionalen Leistungshalbleiterschalter. Im Unterschied zur zu den Ausführungsformen gemäss Fig. 1a, Fig. 1b, Fig. 1c und Fig. 2 ist der zweite Leistungshalbleiterschalter 3 einer jeden zweiten Schaltgruppe 5.1, ..., 5.p und der erste Leistungshalbleiterschalter 2 einer jeden dritten Schaltgruppe 6.1, ..., 6.p ein unidirektionalen Leistungshalbleiterschalter. Durch diese Massnahme kann die erfindungsgemässe Umrichterschaltung weiter vereinfacht werden.

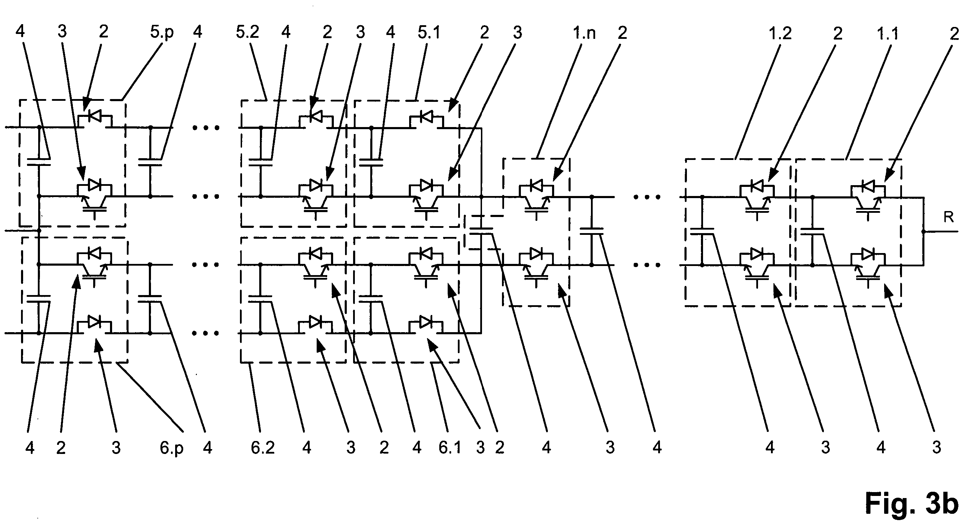

In Fig. 3b ist eine, insbesondere einphasige, sechste Ausführungsform der erfindungsgemässen Umrichterschaltung zur Schaltung einer Vielzahl von Schaltspannungsniveaus gezeigt. Gemäss Fig. 3b ist der erste Leistungshalbleiterschalter 2 einer jeden ersten und einer jeden dritten Schaltgruppe 1.1,..., 1.n; 6.1, ..., 6.p ein bidirektionalen Leistungshalbleiterschalter. Zudem ist der zweite Leistungshalbleiterschalter 3 einer jeden ersten und einer jeden zweiten Schaltgruppe 1.1,..., 1.n; 5.1, ..., 5.p ein bidirektionalen Leistungshalbleiterschalter. Darüber hinaus ist der erste Leistungshalbleiterschalter 2 einer jeden zweiten Schaltgruppe 5.1, ..., 5.p und der zweite Leistungshalbleiterschalter 3 einer jeden dritten Schaltgruppe 6.1, ..., 6.p ein unidirektionalen Leistungshalbleiterschalter. Neben den bereits bei der fünften Ausführungsform gemäss Fig. 3a erwähnten Vorteilen der Vereinfachung der Umrichterschaltung kann die Spannung an den jeweiligen Kondensatoren 4 einer jeden zweiten und dritten Schaltgruppe 5.1, ..., 5.p; 6.1, ..., 6.p bei der sechsten Ausführungsform der Umrichterschaltung gemäss Fig. 3b zusätzlich sehr einfach, beispielsweise auf einen vorgegebenen Wert, insbesondere durch Ausregelung, eingestellt werden.

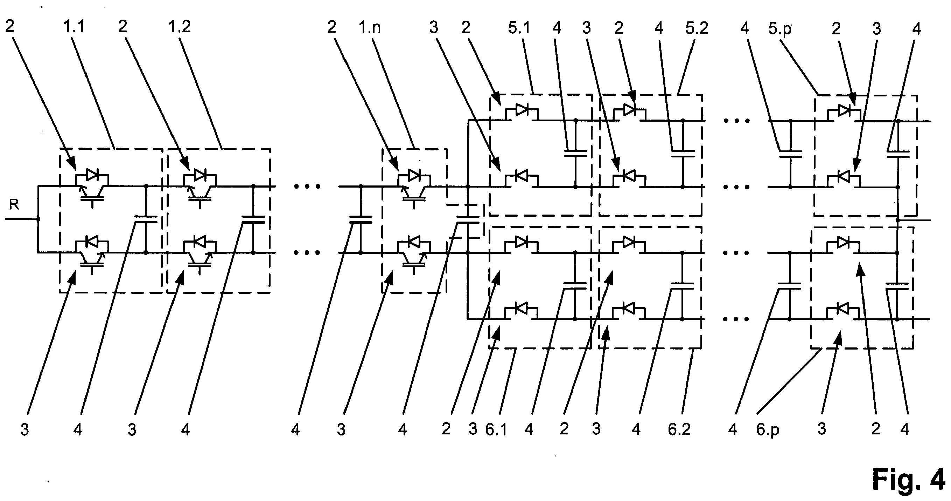

In Fig. 4 ist eine, insbesondere einphasige, siebte Ausführungsform der erfindungsgemässen Umrichterschaltung zur Schaltung einer Vielzahl von Schaltspannungsniveaus dargestellt. Darin ist der erste Leistungshalbleiterschalter 2 und der zweite Leistungshalbleiterschalter 3 einer jeden ersten Schaltgruppe 1.1,..., 1.n ein bidirektionalen Leistungshalbleiterschalter. Desweiteren ist der erste Leistungshalbleiterschalterschalter 2 und der zweite Leistungshalbleiterschalter 3 einer jeden zweiten Schaltgruppe 5.1, ..., 5.p und einer jeden dritten Schaltgruppe 6.1, ..., 6.p ein unidirektionalen Leistungshalbleiterschalter. Durch diese Massnahme ist die erfindungsgemässe Umrichterschaltung ein Gleichrichter, der sehr einfach und zudem platzsparend realisiert ist, da er mit einer minimalen Anzahl an bidirektionalen Leistungshalbleiterschalter auskommt.

Vorzugsweise ist der jeweilige bidirektionale Leistungshalbleiterschalter der Ausführungsformen der erfindungsgemässen Umrichterschaltung nach Fig. 1a bis Fig. 4 durch ein ansteuerbares elektronisches Bauelement mit unidirektionaler Stromführungsrichtung, beispielsweise durch einen Bipolartransistor mit isoliert angeordneter Ansteuerelektrode (IGBT - Insulated Gate Bipolartransistor) oder wie in Fig. 1c gezeigt und bereits erwähnt durch einen Abschaltthyristor (GTO - Gate Turn-Off Thyristor) oder einen integrierten Thyristor mit kommutierter Ansteuerelektrode (IGCT - Integrated Gate Commutated Thyristor), und durch ein dazu antiparallel geschaltetes passives nicht ansteuerbares elektronisches Bauelement mit unidirektionaler Stromführungsrichtung, beispielsweise durch eine Diode gebildet. Die gemäss Fig. 1a, Fig. 1b, Fig. 1c und Fig. 2 als bidirektionale Leistungshalbleiterschalter ausgebildeten ersten und zweiten Leistungshalbleiterschalter 2, 3 sind innerhalb der jeweiligen Schaltgruppe 1.1,..., 1.n; 5.1, ..., 5.p; 6.1, ..., 6.p derart verschaltet, dass sie eine entgegengesetzte gesteuerte Hauptstromrichtung aufweisen, d.h. die ansteuerbaren elektronischen Bauelemente mit unidirektionaler Stromführungsrichtung eine zueinander entgegengesetzte gesteuerte Hauptstromrichtung aufweisen. Darüber hinaus sind die passiven nicht ansteuerbaren elektronischen Bauelemente mit unidirektionaler Stromführungsrichtung der ersten und zweiten Leistungshalbleiterschalter 2, 3 gemäss Fig. 1a, Fig. 1b, Fig. 1c und Fig. 2 innerhalb der jeweiligen Schaltgruppe 1.1,..., 1.n; 5.1, ..., 5.p; 6.1, ..., 6.p derart verschaltet, dass sie eine zueinander entgegengesetzte gesteuerte Stromrichtung aufweisen.

Weiterhin ist der jeweilige unidirektionale Leistungshalbleiterschalter gemäss den Ausführungsformen der erfindungsgemässen Umrichterschaltung nach Fig. 3a,b und Fig. 4 vorzugsweise durch ein passives nicht ansteuerbares elektronischen Bauelement mit unidirektionaler Stromführungsrichtung, beispielsweise durch eine Diode gebildet. Wie bereits erwähnt, kann die erfindungsgemässe Umrichterschaltung gemäss Fig. 3a,b und Fig. 4 durch diese Massnahme weiter dahingehend vereinfacht werden, dass weniger ansteuerbare elektronische Bauelement mit unidirektionaler Stromführungsrichtung benötigt werden und der Ansteueraufwand somit signifikant reduziert werden kann. Die gemäss Fig. 3a,b und Fig. 4 als bidirektionale Leistungshalbleiterschalter ausgebildeten ersten und zweiten Leistungshalbleiterschalter 2, 3 sind innerhalb der jeweiligen ersten Schaltgruppen 1.1,..., 1.n derart verschaltet, dass sie eine entgegengesetzte gesteuerte Hauptstromrichtung aufweisen, d.h. die ansteuerbaren elektronischen Bauelemente mit unidirektionaler Stromführungsrichtung eine zueinander entgegengesetzte gesteuerte Hauptstromrichtung aufweisen. Ferner ist gemäss Fig. 3a,b bei der jeweiligen zweiten und dritten Schaltgruppe 5.1, ..., 5.p; 6.1, ..., 6.p das passive nicht ansteuerbare elektronische Bauelement mit unidirektionaler Stromführungsrichtung des ersten beziehungsweise zweiten Leistungshalbleiterschalters 2, 3 und das ansteuerbare elektronische Bauelemente mit unidirektionaler Stromführungsrichtung des ersten beziehungsweise zweiten Leistungshalbleiterschalters 2, 3 innerhalb der jeweiligen zweiten und dritten Schaltgruppe 5.1, ..., 5.p; 6.1, ..., 6.p derart verschaltet, dass sie eine zueinander entgegengesetzte Stromrichtung aufweisen. Schliesslich sind die gemäss Fig. 4 als unidirektionalen Leistungshalbleiterschalter ausgebildeten ersten und zweiten Leistungshalbleiterschalter 2, 3 innerhalb der jeweiligen zweiten und dritten Schaltgruppe 5.1, ..., 5.p; 6.1, ..., 6.p derart verschaltet, dass sie eine zueinander entgegengesetzte Stromrichtung aufweisen.

Es hat sich zudem als sehr vorteilhaft erwiesen, bei den n ersten Schaltgruppen 1.1,..., 1.n die zwei ersten Leistungshalbleiterschalter 2 jeweils benachbarter erster Schaltgruppen 1.1,..., 1.n in einem Modul zu integrieren, d.h. dass bei mehreren vorhandenen ersten Schaltgruppen 1.1,..., 1.n der erste Leistungshalbleiterschalter 2 der n-ten ersten Schaltgruppe 1.n und der erste Leistungshalbleiterschalter 2 der (n-1)-ten ersten Schaltgruppe 1.(n-1) in einem Modul integriert sind und der erste Leistungshalbleiterschalter 2 der (n-1)-ten ersten Schaltgruppe 1.(n-1) und der erste Leistungshalbleiterschalter 2 der (n-2)-ten ersten Schaltgruppe 1.(n-2) in einem Modul integriert sind usw.. Weiterhin hat es sich als vorteilhaft erwiesen, bei den n ersten Schaltgruppen 1.1,..., 1.n die zwei zweiten Leistungshalbleiterschalter 3 jeweils benachbarter erster Schaltgruppen 1.1,..., 1.n in einem Modul zu integrieren, d.h. dass bei mehreren vorhandenen ersten Schaltgruppen 1.1,..., 1.n der zweite Leistungshalbleiterschalter 3 der n-ten ersten Schaltgruppe 1.n und der zweite Leistungshalbleiterschalter 3 der (n-1)-ten ersten Schaltgruppe 1.(n-1) in einem Modul integriert sind und der zweite Leistungshalbleiterschalter 3 der (n-1)-ten ersten Schaltgruppe 1.(n-1) und der zweite Leistungshalbleiterschalter 3 der (n-2)-ten ersten Schaltgruppe 1.(n-2) in einem Modul integriert sind usw.. Solche Module sind gängigerweise Standard-Halbbrücken-Module und dementsprechend einfach aufgebaut, wenig störanfällig und zudem kostengünstig. Ferner hat es sich bei mehreren vorhandenen zweiten Schaltgruppen 5.1,..., 5.p als vorteilhaft erwiesen, dass bei den p zweiten Schaltgruppen 5.1,..., 5.p die zwei ersten Leistungshalbleiterschalter 2 jeweils benachbarter zweiter Schaltgruppen 5.1,..., 5.p in einem Modul und die zwei zweiten Leistungshalbleiterschalter 3 jeweils benachbarter zweiter Schaltgruppen 5.1,..., 5.p in einem Modul nach der vorstehend für die ersten Schaltgruppen 1.1,..., 1.n detailliert beschriebenen Weise zu integrieren. Darüber hinaus hat es sich bei mehreren vorhandenen dritten Schaltgruppen 6.1,..., 6.p als vorteilhaft erwiesen, dass bei den p dritten Schaltgruppen 6.1,..., 6.p die zwei ersten Leistungshalbleiterschalter 2 jeweils benachbarter dritter Schaltgruppen 6.1,..., 6.p in einem Modul und die zwei zweiten Leistungshalbleiterschalter 3 jeweils benachbarter dritter Schaltgruppen 6.1,..., 6.p in einem Modul nach der vorstehend für die ersten Schaltgruppen 1.1,..., 1.n detailliert beschriebenen Weise zu integrieren. Es versteht sich, dass die vorstehend detailliert erläuterte Integration der jeweiligen ersten und zweiten Leistungshalbleiterschalter 2, 3 für sämtliche Ausführungsformen der erfindungsgemässen Umrichterschaltung gemäss Fig. 1a bis Fig. 4 gilt.

Es ist aber auch denkbar, bei den n ersten Schaltgruppen 1.1, ..., 1.n, bei den p zweiten und dritten Schaltgruppen 5.1,..., 5.p;6.1,..., 6.p jeweils den ersten Leistungshalbleiterschalter 2 und den zweiten Leistungshalbleiterschalter 3 in einem Modul zu integrieren. Wie bereits erwähnt sind solche Module üblicherweise Standard-Halbbrücken-Module und dementsprechend einfach aufgebaut, wenig störanfällig und zudem kostengünstig. Es versteht auch hier sich, dass die vorstehend detailliert erläuterte Integration der jeweiligen ersten und zweiten Leistungshalbleiterschalter 2, 3 für sämtliche Ausführungsformen der erfindungsgemässen Umrichterschaltung gemäss Fig. 1a bis Fig. 4 gilt.

Bei einer mehrphasig zu realisierenden erfindungsgemässen Umrichterschaltung sind die p-ten zweiten Schaltgruppen 5.p der Phasen R, S, T vorzugsweise parallel miteinander verbunden und die p-ten dritten Schaltgruppen 6.p der Phasen R, S, T parallel miteinander verbunden. Die jeweiligen Verbindungen erfolgen an den Kondensatoren 4 der jeweiligen p-ten zweiten Schaltgruppen 5.p beziehungsweise an den Kondensatoren 4 der jeweiligen p-ten dritten Schaltgruppen 6.p.

Um vorteilhaft bei einer mehrphasig realisierten Umrichterschaltung Platz einsparen zu können sind die Kondensatoren 4 der p-ten zweiten Schaltgruppen 5.p der Phasen R, S, T vorzugsweise zu einem Kondensator zusammengefasst. Zudem sind die Kondensatoren 4 der p-ten dritten Schaltgruppen 6.p der Phasen R, S, T vorzugsweise ebenfalls zu einem Kondensator zusammengefasst.

Insgesamt stellt die erfindungsgemässe Umrichterschaltung zur Schaltung einer Vielzahl von Schaltspannungsniveaus somit eine durch eine geringe gespeicherte elektrische Energie während ihres Betriebes und durch einen platzsparenden Aufbau gekennzeichnete und damit unkomplizierte, robuste und wenig störungsanfällige Lösung dar.

### Bezugszeichenliste

- 1.1, ..., 1.n: erste Schaltgruppen
- 2: erster Leistungshalbleiterschalter
- 3: zweiter Leistungshalbleiterschalter
- 4: Kondensator
- 5.1, ..., 5.p: zweite Schaltgruppen
- 6.1, ..., 6.p: dritte Schaltgruppen
- 7: Spannungsbegrenzungsnetzwerk

## Patentansprüche

1. Umrichterschaltung zur Schaltung einer Vielzahl von Schaltspannungsniveaus,
mit n für jede Phase (R, S, T) vorgesehenen ersten Schaltgruppen (1.1,..., 1.n), wobei n ≥ 1 und die n-te erste Schaltgruppe (1.n) durch einen ersten Leistungshalbleiterschalter (2) und zweiten Leistungshalbleiterschalter (3) gebildet ist und für n > 1 die erste Schaltgruppe (1.1) bis zur (n-1)-ten Schaltgruppe (1.(n-1)) jeweils durch einen ersten Leistungshalbleiterschalter (2) und zweiten Leistungshalbleiterschalter (3) und durch einen mit dem ersten und zweiten Leistungshalbleiterschalter (2, 3) seriell verbundenen Kondensator (4) gebildet ist, wobei
die Verbindungspunkte des ersten und zweiten Leistungshalbleiterschalters (2, 3) mit dem Kondensator (4) und der weitere Anschluss des ersten und des zweiten Leistungshalbleiterschalter (2, 3) eine Vierpolkonfiguration bilden und wobei
jede der n ersten Schaltgruppen (1.1,..., 1.n) nach Art einer Flying Capacitor Struktur verkettet mit der jeweils benachbarten ersten Schaltgruppe (1.1,...,1.n) verbunden ist und der erste und der zweite Leistungshalbleiterschalter (2, 3) der ersten Schaltgruppe (1.1) der ersten Schaltgruppen (1.1, ... , 1.n) miteinander verbunden sind, und wobei
p zweite Schaltgruppen (5.1, ..., 5.p) und p dritte Schaltgruppen (6.1, ..., 6.p) vorgesehen sind, welche jeweils durch einen ersten Leistungshalbleiterschalter (2) und zweiten Leistungshalbleiterschalter (3) und durch einen mit dem ersten und zweiten Leistungshalbleiterschalter (2, 3) seriell verbundenen Kondensator (4) gebildet sind, wobei
die Verbindungspunkte des ersten und zweiten Leistungshalbleiterschalter (2, 3) mit dem Kondensator (4) und der weitere Anschluss des ersten und des zweiten Leistungshalbleiterschalter (2, 3) eine Vierpolkonfiguration bilden und wobei
p ≥ 2 ist und jede der p zweiten Schaltgruppen (5.1, ..., 5.p) nach Art einer Flying Capacitor Struktur verkettet mit der jeweils benachbarten zweiten Schaltgruppe (5.1, ..., 5.p) verbunden ist und jede der p dritten Schaltgruppen (6.1, ..., 6.p) nach Art einer Flying Capacitor Struktur verkettet mit der jeweils benachbarten dritten Schaltgruppe (6.1, ..., 6.p) verbunden ist, und der erste und der zweite Leistungshalbleiterschalter der ersten zweiten Schaltgruppe (5.1) miteinander und mit dem ersten Leistungshalbleiterschalter (2) der n-ten ersten Schaltgruppe (1.n) seriell verbunden sind und der erste und der zweite Leistungshalbleiterschalter der ersten dritten Schaltgruppe (6.1) miteinander und mit dem zweiten Leistungshalbleiterschalter (3) der n-ten ersten Schaltgruppe (1.n) seriell verbunden sind,
der Kondensator (4) der p-ten zweiten Schaltgruppe (5.p) mit dem Kondensator (4) der p-ten dritten Schaltgruppe (6.p) seriell verbunden ist, **dadurch gekennzeichnet, dass**
die Kondensatoren der übrigen zweiten und dritten Schaltgruppen (5.p, 6.p) nicht miteinander verbunden sind.

2. Umrichterschaltung nach Anspruch 1, wobei parallel zum ersten Leistungshalbleiterschalter (2) der n-ten ersten Schaltgruppe (1.n) ein Spannungsbegrenzungsnetzwerk (7) geschaltet ist und parallel zum zweiten Leistungshalbleiterschalter (3) der n-ten ersten Schaltgruppe (1.n) ein Spannungsbegrenzungsnetzwerk (7) geschaltet ist.

3. Umrichterschaltung nach Anspruch 2, wobei das Spannungsbegrenzungsnetzwerk (7) einen Kondensator aufweist.

4. Umrichterschaltung nach Anspruch 2, wobei das Spannungsbegrenzungsnetzwerk (7) eine Serienschaltung eines Widerstands mit einem Kondensator aufweist.

5. Umrichterschaltung nach Anspruch 1, wobei die n-te erste Schaltgruppe (1.n) einen mit dem ersten und zweiten Leistungshalbleiterschalter (2,3) der n-ten ersten Schaltgruppe (1.n) verbundenen Kondensator (4) aufweist, wobei die erste zweite Schaltgruppe (5.1) mit dem Kondensator (4) der n-ten ersten Schaltgruppe (1.n) verbunden ist und die erste dritte Schaltgruppe (6. 1) mit dem Kondensator (4) der n-ten ersten Schaltgruppe (1.n) verbunden ist.

6. Umrichterschaltung nach einem der Ansprüche 1 bis 5, wobei die Anzahl der n ersten Schaltgruppen (1. 1,..., 1.n) der Anzahl der p zweiten und dritten Schaltgruppen (5. 1,..., 5. p ; 6. 1,..., 6. p) entspricht.

7. Umrichterschaltung nach einem der Ansprüche 1 bis 5, wobei die Anzahl der n ersten Schaltgruppen (1. 1,..., 1. n) kleiner als die Anzahl der p zweiten und dritten Schaltgruppen (5. 1,..., 5. p ; 6. 1,..., 6. p) ist.

8. Umrichterschaltung nach einem der Ansprüche 1 bis 5, wobei die Anzahl der n ersten Schaltgruppen (1. 1,..., 1. n) grösser als die Anzahl der p zweiten und dritten Schaltgruppen (5. 1,..., 5. p ; 6. 1,..., 6. p) ist.

9. Umrichterschaltung nach einem der Ansprüche 1 bis 8, wobei der erste Leistungshalbleiterschalter (2) und der zweite Leistungshalbleiterschalter (3) einer jeden Schaltgruppe (1. 1,..., 1. n ; 5.1,..., 5. p ; 6. 1,..., 6. p) ein bidirektionalen Leistungshalbleiterschalter ist.

10. Umrichterschaltung nach einem der Ansprüche 1 bis 8, wobei der erste Leistungshalbleiterschalter (2). einer jeden ersten und einer jeden zweiten Schaltgruppe (1. 1,..., 1. n ; 5. 1,..., 5. p) ein bidirektionalen Leistungshalbleiterschalter ist, der zweite Leistungshalbleiterschalter (3) einer jeden ersten und einer jeden dritten Schaltgruppe (1. 1,..., 1. n ; 6. 1,..., 6. p) ein bidirektionalen Leistungshalbleiterschalter ist, und der zweite Leistungshalbleiterschalter (3) einer jeden zweiten Schaltgruppe (5. 1,..., 5. p) und der erste Leistungshalbleiterschalter (2) einer jeden dritten Schaltgruppe (6.1, ..., 6. p) ein unidirektionalen Leistungshalbleiterschalter ist.

11. Umrichterschaltung nach einem der Ansprüche 1 bis 8, wobei der erste Leistungshalbleiterschalter (2) einer jeden ersten und einer jeden dritten Schaltgruppe (1. 1,..., 1. n ; 6. 1,..., 6. p) ein bidirektionalen Leistungshalbleiterschalter ist, der zweite Leistungshalbleiterschalter (3) einer jeden ersten und einer jeden zweiten Schaltgruppe (1. 1,..., 1. n ; 5. 1,..., 5. p) ein bidirektionalen Leistungshalbleiterschalter ist, und der erste Leistungshalbleiterschalter (2) einer jeden zweiten Schaltgruppe (5. 1,.... 5. p) und der zweite Leistungshalbleiterschalter (3) einer jeden dritten Schaltgruppe (6.1, ..., 6. p) ein unidirektionalen Leistungshalbleiterschalter ist.

12. Umrichterschaltung nach einem der Ansprüche 1 bis 8, wobei der erste Leistungshalbleiterschalter (2) und der zweite Leistungshalbleiterschalter (3) einer jeden ersten Schaltgruppe (1. 1,..., 1. n) ein bidirektionalen Leistungshalbleiterschalter ist, und der erste Leistungshalbleiterschalterschalter (2) und der zweite Leistungshalbleiterschalter (3) einer jeden zweiten Schaltgruppe (5.1,..., 5. p) und einer jeden dritten Schaltgruppe (6. 1,-..., 6. p) ein unidirektionalen Leistungshalbleiterschalter ist.

13. Umrichterschaltung nach einem der Ansprüche 9 bis 12, wobei der bidirektionale Leistungshalbleiterschalter durch ein ansteuerbares elektronisches Bauelement mit unidirektionaler Stromführungsrichtung und durch ein dazu antiparallel geschaltetes passives nicht ansteuerbares elektronisches Bauelement mit unidirektionaler Stromführungsrichtung gebildet ist.

14. Umrichterschaltung nach einem der Ansprüche 10 bis 13, wobei der unidirektionale Leistungshalbleiterschalter durch ein passives nicht ansteuerbares elektronischen Bauelement mit unidirektionaler Stromführungsrichtung gebildet ist.

15. Umrichterschaltung nach einem der vorhergehenden Ansprüche, wobei bei den n ersten Schaltgruppen (1. 1,..., 1. n) die zwei ersten Leistungshalbleiterschalter (2) jeweils benachbarter erster Schaltgruppen (1. 1,..., 1. n) in einem Modul integriert sind und die zwei zweiten Leistungshalbleiterschalter (3) jeweils benachbarter erster Schaltgruppen (1. 1,..., 1. n) in einem Modul integriert sind.

16. Umrichterschaltung nach Anspruch 15, wobei bei den p zweiten Schaltgruppen (5. 1,..., 5. p) die zwei ersten Leistungshalbleiterschalter (2) jeweils benachbarter zweiter Schaltgruppen (5. 1,..., 5. p) in einem Modul integriert sind und die zwei zweiten Leistungshalbleiterschalter (3) jeweils benachbarter zweiter Schaltgruppen (5. 1,..., 5. p) in einem Modul integriert sind, und bei den p dritten Schaltgruppen (6. 1,..., 6. p) die zwei ersten Leistungshalbleiterschalter (2) jeweils benachbarter dritter Schaltgruppen (6. 1,..., 6. p) in einem Modul integriert sind und die zwei zweiten Leistungshalbleiterschalter (3) jeweils benachbarter dritter Schaltgruppen (6. 1,..., 6. p) in einem Modul integriert sind.

17. Umrichterschaltung nach einem der Ansprüche 1 bis 14, wobei bei den n ersten Schaltgruppen (1. 1,..., 1. n) und bei den p zweiten und dritten Schalt- gruppen 5. p ; 6. 1,..., 6. p) jeweils der erste Leistungshalbleiterschalter (2) und der zweite Leistungshalbleiterschalter (3) in einem Modul integriert ist.

18. Umrichterschaltung nach einem der vorhergehenden Ansprüche, **dadurch gekennzeichnet, dass** bei bei mehreren Phasen (R, S, T) die p-ten zweiten Schaltgruppen (5. p) der Phasen (R, S, T) parallel miteinander verbunden sind und die p-ten dritten Schaltgruppen (6.p) der Phasen (R, S, T) parallel miteinander verbunden sind.

19. Umrichterschaltung nach Anspruch 1, wobei die Kondensatoren (4) der p-ten zweiten Schaltgruppen (5. p) der Phasen (R, S, T) zu einem Kondensator zusammengefasst sind, und die Kondensatoren (4) der p-ten dritten Schaltgruppen (6. p) der Phasen (R, S, T) zu einem Kondensator zusammengefasst sind.

## Claims

1. Converter circuit for switching a large number of switching voltage levels,
having n first switching groups (1.1,..., 1.n) which are provided for each phase (R, Y, B), wherein n ≥ 1 and the n-th first switching group (1.n) is formed by a first power semiconductor switch (2) and a second power semiconductor switch (3), and, for n > 1, the first switching group (1.1) to the (n-1)-th switching group (1.(n-1)) are each formed by a first power semiconductor switch (2) and a second power semiconductor switch (3) and by a capacitor (4) which is connected in series with the first and second power semiconductor switches (2, 3), wherein
the connection points of the first and second power semiconductor switches (2, 3) to the capacitor (4) and the further connection of the first and second power semiconductor switches (2, 3) form a four-pole configuration, and wherein
each of the n first switching groups (1.1,..., 1.n) is connected, in the form of a flying capacitor structure, to the respectively adjacent first switching group (1.1,..., 1.n) in a concatenated manner, and the first and second power semiconductor switches (2, 3) in the first switching group (1.1) of the first switching groups (1.1,..., 1.n) are connected to one another, and wherein
p second switching groups (5.1, ..., 5.p) and p third switching groups (6.1, ..., 6.p) are provided and are each formed by a first power semiconductor switch (2) and a second power semiconductor switch (3) and by a capacitor (4) which is connected in series with the first and second power semiconductor switches (2, 3), wherein
the connection points of the first and second power semiconductor switches (2, 3) to the capacitor (4) and the further connection of the first and second power semiconductor switches (2, 3) form a four-pole configuration, and wherein
p ≥ 2 and each of the p second switching groups (5.1, ..., 5.p) is connected, in the form of a flying capacitor structure, to the respectively adjacent second switching group (5.1, ..., 5.p) in a concatenated manner, and each of the p third switching groups (6.1, ..., 6.p) is connected, in the form of a flying capacitor structure, to the respectively adjacent third switching group (6.1, ..., 6.p) in a concatenated manner, and the first and second power semiconductor switches in the first second switching group (5.1) are connected to one another and are connected in series with the first power semiconductor switch (2) in the n-th first switching group (1.n), and the first and second power semiconductor switches in the first third switching group (6.1) are connected to one another and are connected in series with the second power semiconductor switch (3) in the n-th first switching group (1.n),
the capacitor (4) in the p-th second switching group (5.p) is connected in series with the capacitor (4) in the p-th third switching group (6.p),
**characterized in that**
the capacitors in the remaining second and third switching groups (5.p, 6.p) are not connected to one another.

2. Converter circuit according to Claim 1, wherein a voltage limiting network (7) is connected in parallel with the first power semiconductor switch (2) in the n-th first switching group (1.n), and a voltage limiting network (7) is connected in parallel with the second power semiconductor switch (3) in the n-th first switching group (1.n).

3. Converter circuit according to Claim 2, wherein the voltage limiting network (7) has a capacitor.

4. Converter circuit according to Claim 2, wherein the voltage limiting network (7) has a series circuit formed by a resistor with a capacitor.

5. Converter circuit according to Claim 1, wherein the n-th first switching group (1.n) has a capacitor (4) which is connected to the first and second power semiconductor switches (2, 3) in the n-th first switching group (1.n), wherein the first second switching group (5.1) is connected to the capacitor (4) in the n-th first switching group (1.n), and the first third switching group (6.1) is connected to the capacitor (4) in the n-th first switching group (1.n).

6. Converter circuit according to one of Claims 1 to 5, wherein the number of n first switching groups (1.1,..., 1.n) corresponds to the number of p second and third switching groups (5.1, ..., 5.p; 6.1, ..., 6.p).

7. Converter circuit according to one of Claims 1 to 5, wherein the number of n first switching groups (1.1,..., 1.n) is less than the number of p second and third switching groups (5.1, ..., 5.p; 6.1, ..., 6.p).

8. Converter circuit according to one of Claims 1 to 5, wherein the number of n first switching groups (1.1,..., 1.n) is greater than the number of p second and third switching groups (5.1, ..., 5.p; 6.1, ..., 6.p).

9. Converter circuit according to one of Claims 1 to 8, wherein the first power semiconductor switch (2) and the second power semiconductor switch (3) in each switching group (1.1,..., 1.n; 5.1, ..., 5.p; 6.1, ..., 6.p) are a bidirectional power semiconductor switch.

10. Converter circuit according to one of Claims 1 to 8, wherein the first power semiconductor switch (2) in each first and in each second switching group (1.1,..., 1.n; 5.1, ..., 5.p) is a bidirectional power semiconductor switch, the second power semiconductor switch (3) in each first and in each third switching group (1.1,..., 1.n; 6.1, ..., 6.p) is a bidirectional power semiconductor switch, and the second power semiconductor switch (3) in each second switching group (5.1, ..., 5.p) and the first power semiconductor switch (2) in each third switching group (6.1, ..., 6.p) are a unidirectional power semiconductor switch.

11. Converter circuit according to one of Claims 1 to 8, wherein the first power semiconductor switch (2) in each first and in each third switching group (1.1,..., 1.n; 6.1, ..., 6.p) is a bidirectional power semiconductor switch, the second power semiconductor switch (3) in each first and in each second switching group (1.1,..., 1.n; 5.1, ..., 5.p) is a bidirectional power semiconductor switch, and the first power semiconductor switch (2) in each second switching group (5.1, ..., 5.p) and the second power semiconductor switch (3) in each third switching group (6.1, ..., 6.p) are a unidirectional power semiconductor switch.

12. Converter circuit according to one of Claims 1 to 8, wherein the first power semiconductor switch (2) and the second power semiconductor switch (3) in each first switching group (1.1,..., 1.n) are a bidirectional power semiconductor switch, and the first power semiconductor switch (2) and the second power semiconductor switch (3) in each second switching group (5.1, ..., 5.p) and in each third switching group (6.1, ..., 6.p) are a unidirectional power semiconductor switch.

13. Converter circuit according to one of Claims 9 to 12, wherein the bidirectional power semiconductor switch is formed by an electronic component which can be driven and carries current in only one direction, and by a passive electronic component which is connected back-to-back in parallel with this, cannot be driven and carries current in only one direction.

14. Converter circuit according to one of Claims 10 to 13, wherein the unidirectional power semiconductor switch is formed by a passive electronic component which cannot be driven and carries current in only one direction.

15. Converter circuit according to one of the preceding claims, wherein, in the case of the n first switching groups (1.1,..., 1.n), the two first power semiconductor switches (2) in respectively adjacent first switching groups (1.1,..., 1.n) are integrated in a module, and the two second power semiconductor switches (3) in respectively adjacent first switching groups (1.1,..., 1.n) are integrated in a module.

16. Converter circuit according to Claim 15, wherein, in the case of the p second switching groups (5.1, ..., 5.p), the two first power semiconductor switches (2) in respectively adjacent second switching groups (5.1, ..., 5.p) are integrated in a module, and the two second power semiconductor switches (3) in respectively adjacent second switching groups (5.1, ..., 5.p) are integrated in a module, and, in the case of the p third switching groups (6.1, ..., 6.p), the two first power semiconductor switches (2) in respectively adjacent third switching groups (6.1, ..., 6.p) are integrated in a module, and the two second power semiconductor switches (3) in respectively adjacent third switching groups (6.1, ..., 6.p) are integrated in a module.

17. Converter circuit according to one of Claims 1 to 14, wherein, in the case of the n first switching groups (1.1,..., 1.n) and in the case of the p second and third switching groups 5.p; 6.1, ..., 6.p), the first power semiconductor switch (2) and the second power semiconductor switch (3) are in each case integrated in a module.

18. Converter circuit according to one of the preceding claims, wherein, if there are a plurality of phases (R, Y, B), the p-th second switching groups (5.p) for the phases (R, Y, B) are connected in parallel with one another, and the p-th third switching groups (6.p) for the phases (R, Y, B) are connected in parallel with one another.

19. Converter circuit according to Claim 1, wherein the capacitors (4) in the p-th second switching groups (5.p) for the phases (R, Y, B) are combined to form one capacitor, and the capacitors (4) in the p-th third switching groups (6.p) for the phases (R, Y, B) are combined to form one capacitor.

## Revendications

1. Circuit convertisseur statique destiné à commuter une pluralité de niveaux de tension,
comprenant n premiers groupes de commutation (1.1, ..., 1.n) prévus pour chaque phase (R, S, T), avec n ≥ 1 et le n-ème premier groupe de commutation (l.n) étant formé par un premier commutateur semiconducteur de puissance (2) et un deuxième commutateur semiconducteur de puissance (3) et pour n > 1, le premier groupe de commutation (1.1) au (n-1)-ème groupe de commutation (1.(n-1)) étant respectivement formé par un premier commutateur semiconducteur de puissance (2) et un deuxième commutateur semiconducteur de puissance (3) et par un condensateur (4) branché en série avec le premier et le deuxième commutateur semiconducteur de puissance (2, 3), les points de connexion du premier et du deuxième commutateur semiconducteur de puissance (2, 3) avec le condensateur (4) et l'autre borne du premier et du deuxième commutateur semiconducteur de puissance (2, 3) formant une configuration quadripolaire et
chacun des n premiers groupes de commutation (1.1, ..., 1.n) étant relié de manière enchaînée à la manière d'une structure à condensateurs flottants au premier groupe de commutation (1.1, ..., 1.n) respectivement voisin et les premiers et les deuxièmes commutateurs semiconducteurs de puissance (2, 3) du premier groupe de commutation (1.1) des premiers groupe de commutation (1.1, ..., 1.n) étant reliés entre eux,
et
p deuxièmes groupes de commutation (5.1, ..., 5.p) et p troisièmes groupes de commutation (6.1, ..., 6.p) étant présents, lesquels sont respectivement formés par un premier commutateur semiconducteur de puissance (2) et un deuxième commutateur semiconducteur de puissance (3) et par un condensateur (4) branché en série avec le premier et le deuxième commutateur semiconducteur de puissance (2, 3),
les points de connexion du premier et du deuxième commutateur semiconducteur de puissance (2, 3) avec le condensateur (4) et l'autre borne du premier et du deuxième commutateur semiconducteur de puissance (2, 3) formant une configuration quadripolaire et
p étant ≥ 2 et chacun des p deuxièmes groupes de commutation (5.1, ..., 5.p) étant relié de manière enchaînée à la manière d'une structure à condensateurs flottants au deuxième groupe de commutation (5.1, ..., 5.p) respectivement voisin et chacun des p troisièmes groupes de commutation (6.1, ..., 6.p) étant relié de manière enchaînée à la manière d'une structure à condensateurs flottants au troisièmes groupe de commutation (6.1, ..., 6.p) respectivement voisin
et les premiers et les deuxièmes commutateurs semiconducteurs de puissance du premier des deuxièmes groupes de commutation (5.1) étant reliés entre eux et étant reliés en série avec le premier commutateur semiconducteur de puissance (2) du n-ème premier groupe de commutation (l.n) et les premiers et les deuxièmes commutateurs semiconducteurs de puissance du premier des troisièmes groupes de commutation (6.1) étant reliés entre eux et étant reliés en série avec le deuxième commutateur semiconducteur de puissance (3) du n-ème premier groupe de commutation (1.n),
le condensateur (4) du p-ème deuxième groupe de commutation (5.p) étant relié en série avec le condensateur (4) du p-ème troisième groupe de commutation (6.p),
**caractérisé en ce que**
les condensateurs des deuxièmes et troisièmes groupes de commutation (5.p, 6.p) restants ne sont pas reliés entre eux.

2. Circuit convertisseur statique selon la revendication 1, un réseau limiteur de tension (7) étant branché en parallèle avec le premier commutateur semiconducteur de puissance (2) du n-ème premier groupe de commutation (l.n) et un réseau limiteur de tension (7) étant branché en parallèle avec le deuxième commutateur semiconducteur de puissance (3) du n-ème premier groupe de commutation (l.n).

3. Circuit convertisseur statique selon la revendication 2, le réseau limiteur de tension (7) possédant un condensateur.

4. Circuit convertisseur statique selon la revendication 2, le réseau limiteur de tension (7) possédant un circuit série d'une résistance avec un condensateur.

5. Circuit convertisseur statique selon la revendication 1, le n-ème premier groupe de commutation (l.n) possédant un condensateur (4) relié au premier et au deuxième commutateur semiconducteur de puissance (2, 3) du n-ème premier groupe de commutation (1.n), le premier deuxième groupe de commutation (5.1) étant relié au condensateur (4) du n-ème premier groupe de commutation (l.n) et le premier troisième groupe de commutation (6.1) étant relié au condensateur (4) du n-ème premier groupe de commutation (l.n).

6. Circuit convertisseur statique selon l'une des revendications 1 à 5, le nombre de n premiers groupes de commutation (1.1, ..., 1.n) correspondant au nombre de p deuxièmes et troisièmes groupes de commutation (5.1, ..., 5.p ; 6.1, ..., 6. p) .

7. Circuit convertisseur statique selon l'une des revendications 1 à 5, le nombre de n premiers groupes de commutation (1.1, ..., 1.n) étant inférieur au nombre de p deuxièmes et troisièmes groupes de commutation (5.1, ..., 5.p ; 6.1, ..., 6. p) .

8. Circuit convertisseur statique selon l'une des revendications 1 à 5, le nombre de n premiers groupes de commutation (1.1, ..., 1.n) étant supérieur au nombre de p deuxièmes et troisièmes groupes de commutation (5.1, ..., 5.p ; 6.1, ..., 6. p) .

9. Circuit convertisseur statique selon l'une des revendications 1 à 8, le premier commutateur semiconducteur de puissance (2) et le deuxième commutateur semiconducteur de puissance (3) de chaque groupe de commutation (1.1, ..., 1.n ; 5.1, ..., 5.p ; 6.1, ..., 6.p) étant un commutateur semiconducteur de puissance bidirectionnel.

10. Circuit convertisseur statique selon l'une des revendications 1 à 8, le premier commutateur semiconducteur de puissance (2) de chaque premier et de chaque deuxième groupe de commutation (1.1, ..., 1.n ; 5.1, ..., 5.p) étant un commutateur semiconducteur de puissance bidirectionnel, le deuxième commutateur semiconducteur de puissance (3) de chaque premier et de chaque troisième groupe de commutation (1.1, ..., 1.n ; 6.1, ..., 6.p) étant un commutateur semiconducteur de puissance bidirectionnel et le deuxième commutateur semiconducteur de puissance (3) de chaque deuxième groupe de commutation (5.1, ..., 5.p) et le premier commutateur semiconducteur de puissance (2) de chaque troisième groupe de commutation (6.1, ..., 6.p) étant un commutateur semiconducteur de puissance unidirectionnel.

11. Circuit convertisseur statique selon l'une des revendications 1 à 8, le premier commutateur semiconducteur de puissance (2) de chaque premier et de chaque troisième groupe de commutation (1.1, ..., 1.n ; 6.1, ..., 6.p) étant un commutateur semiconducteur de puissance bidirectionnel, le deuxième commutateur semiconducteur de puissance (3) de chaque premier et de chaque deuxième groupe de commutation (1.1, ..., 1.n ; 5.1, ..., 5.p) étant un commutateur semiconducteur de puissance bidirectionnel et le premier commutateur semiconducteur de puissance (2) de chaque deuxième groupe de commutation (5.1, ..., 5.p) et le deuxième commutateur semiconducteur de puissance (3) de chaque troisième groupe de commutation (6.1, ..., 6.p) étant un commutateur semiconducteur de puissance unidirectionnel.

12. Circuit convertisseur statique selon l'une des revendications 1 à 8, le premier commutateur semiconducteur de puissance (2) et le deuxième commutateur semiconducteur de puissance (3) de chaque premier groupe de commutation (1.1, ..., 1.n) étant un commutateur semiconducteur de puissance bidirectionnel, et le premier commutateur semiconducteur de puissance (2) et le deuxième commutateur semiconducteur de puissance (3) de chaque deuxième groupe de commutation (5.1, ..., 5.p) et de chaque troisième groupe de commutation (6.1, ..., 6.p) étant un commutateur semiconducteur de puissance unidirectionnel.

13. Circuit convertisseur statique selon l'une des revendications 9 à 12, le commutateur semiconducteur de puissance bidirectionnel étant formé par un composant électronique commandable ayant un sens de passage du courant unidirectionnel et par un composant électronique non commandable passif branché en tête-bêche avec celui-ci ayant un sens de passage du courant unidirectionnel.

14. Circuit convertisseur statique selon l'une des revendications 10 à 13, le commutateur semiconducteur de puissance unidirectionnel étant formé par un composant électronique non commandable passif ayant un sens de passage du courant unidirectionnel.

15. Circuit convertisseur statique selon l'une des revendications précédentes, pour les n premiers groupes de commutation (1.1, ..., 1.n), les deux premiers commutateurs semiconducteurs de puissance (2) de premiers groupes de commutation (1.1, ..., 1.n) respectivement voisins étant intégrés dans un module et les deux deuxièmes commutateurs semiconducteurs de puissance (3) de premiers groupes de commutation (1.1, ..., 1.n) respectivement voisins étant intégrés dans un module.

16. Circuit convertisseur statique selon la revendication 15, pour les p deuxièmes groupes de commutation (5.1, ..., 5.p), les deux premiers commutateurs semiconducteurs de puissance (2) de deuxièmes groupes de commutation (5.1, ..., 5.p) respectivement voisins étant intégrés dans un module et les deux deuxièmes commutateurs semiconducteurs de puissance (3) de deuxièmes groupes de commutation (5.1, ..., 5.p) respectivement voisins étant intégrés dans un module, et pour les p troisièmes groupes de commutation (6.1, ..., 6.p), les deux premiers commutateurs semiconducteurs de puissance (2) de troisièmes groupes de commutation (6.1, ..., 6.p) respectivement voisins étant intégrés dans un module et les deux deuxièmes commutateurs semiconducteurs de puissance (3) de troisièmes groupes de commutation (6.1, ..., 6.p) respectivement voisins étant intégrés dans un module.

17. Circuit convertisseur statique selon l'une des revendications 1 à 14, pour les n premiers groupes de commutation (1.1, ..., 1.n) et pour les p deuxièmes et troisièmes groupes de commutation 5.p ; 6.1, ..., 6.p), le premier commutateur semiconducteur de puissance (2) et le deuxième commutateur semiconducteur de puissance (3) étant respectivement intégrés dans un module.

18. Circuit convertisseur statique selon l'une des revendications précédentes, **caractérisé en ce que** dans le cas de plusieurs phases (R, S, T), les p-èmes deuxièmes groupes de commutation (5.p) des phases (R, S, T) sont reliés en parallèle entre eux et les p-èmes troisièmes groupes de commutation (6.p) des phases (R, S, T) sont reliés en parallèle entre eux.

19. Circuit convertisseur statique selon la revendication 1, les condensateurs (4) des p-èmes deuxièmes groupes de commutation (5.p) des phases (R, S, T) étant regroupés en un condensateur et les condensateurs (4) des p-èmes troisièmes groupes de commutation (6.p) des phases (R, S, T) étant regroupés en un condensateur.
